# EUROPEAN PATENT APPLICATION

(11) **EP 0 762 307 A2**
(43) Date of publication of application: **12.03.1997**
(21) Application number: 96113816.1
(22) Date of filing: 29.08.1996
(51) Int. Cl.: G06K 7/06

(54) **IC card reader**

(30) Priority: 30.08.1995 JP 221379/95
(71) Applicant: MATSUSHITA ELECTRIC INDUSTRIAL CO., LTD., Kadoma-shi, Osaka-fu (JP)
(72) Inventor: Aoki, Shigeo, Ikoma-shi, Nara-ken (JP); Ieda, Tomoaki, Neyagawa-shi, Osaka (JP); Ueda, Masaaki, Katano-shi, Osaka (JP)
(74) Representative: Tiedtke, Harro, Dipl.-Ing.

(57) **Abstract**

An IC-card reader includes a body. A first device is operative for detecting that an IC card is moved into the body. A second device is operative for reading out first data from the IC card, and for processing the first data into second data. A third device is operative for indicating information represented by the second data. The second device and the third device are activated when the first device detects that the IC card is moved into the body.

## Description

### BACKGROUND OF THE INVENTION

### Field of the Invention

This invention relates to an IC-card reader, for example, a portable device for reading out information from an IC card and indicating the readout information.

### Description of the Prior Art

A typical IC card has a thin plastic body containing an IC chip. The IC chip includes, for example, a microprocessor and a memory. The IC card is used to store data or information therein. There is an IC-card reader which serves to read out information from such an IC card. In general, the IC-card reader has a display for indicating the readout information.

Japanese published unexamined patent application 4-170690 discloses a terminal device for a card such as an IC card. A first example of the terminal device in Japanese application 4-170690 includes means for outputting a switch ON signal when a card is placed in a card accommodating portion, and means for feeding electric power to a terminal-device body in response to the switch ON signal. A second example of the terminal device in Japanese application 4-170690 includes means for outputting a switch ON signal when a card is placed in a card accommodating portion, means for outputting a switch OFF signal when the card is removed from the card accommodating portion, means for feeding electric power to a terminal-device body in response to the switch ON signal, and means for suspending the feed of electric power to the terminal-device body in response to the switch OFF signal. Japanese application 4-170690 further discloses that data communication between the card and the terminal-device body is allowed when the terminal-device body is fed with electric power.

### SUMMARY OF THE INVENTION

It is an object of this invention to provide an improved IC-card reader.

A first aspect of this invention provides an IC-card reader comprising a body; first means for detecting that an IC card is moved into the body; second means for reading out first data from the IC card, and for processing the first data into second data; third means for indicating information represented by the second data; and fourth means responsive to the first means and connected to the second means and the third means for activating the second means and the third means when the first means detects that the IC card is moved into the body.

A second aspect of this invention is based on the first aspect thereof, and provides an IC-card reader further comprising a first clock signal generator outputting a first clock signal to the second means, the first clock signal having a first given frequency, a second clock signal generator outputting a second clock signal to the second means, the second clock signal having a second given frequency lower than the first given frequency, the second means selecting one out of the first and second clock signals and operating in response to the selected clock signal.

A third aspect of this invention is based on the second aspect thereof, and provides an IC-card reader further comprising fifth means for deactivating the first clock signal generator after the second means reads out the first data from the IC card.

A fourth aspect of this invention provides an apparatus for an IC card which comprises a first generator producing a first clock signal having a first given frequency; a second generator producing a second clock signal having a second given frequency lower than the first given frequency; and a CPU being programmed to read out first data from the IC card and to process the first data into second data, the CPU being connected to the first and second generators and receiving the first and second clock signals, the CPU being programmed to select one out of the first and second clock signals and operating in response to the selected clock signal, the CPU being programmed to select the first clock signal when reading out the first data from the IC card, and to select the second clock signal when processing the first data into the second data.

A fifth aspect of this invention is based on the fourth aspect thereof, and provides an apparatus further comprising means for deactivating the first generator when the CPU selects the second clock signal.

### BRIEF DESCRIPTION OF THE DRAWINGS

Fig. 1 is a diagram of an IC card and a prior-art IC-card reader.

Fig. 2 is a perspective view of an IC card and an IC-card reader according to a first embodiment of this invention.

Fig. 3 is a diagram of the IC card and the IC-card reader in Fig. 2.

Fig. 4 is a time-domain diagram of conditions of various signals and devices in the IC-card reader of Fig. 3.

Fig. 5 is a diagram of a high-frequency clock signal generator in Fig. 3.

Fig. 6 is a diagram of a power-on reset circuit in Fig. 3.

Fig. 7 is a flowchart of a part of a control program for a CPU in Fig. 3.

Fig. 8 is a diagram of a high-frequency clock signal generator in an IC-card reader according to a second embodiment of this invention.

### DESCRIPTION OF THE PREFERRED EMBODIMENTS

A prior-art IC-card reader will be described hereinafter for a better understanding of this invention.

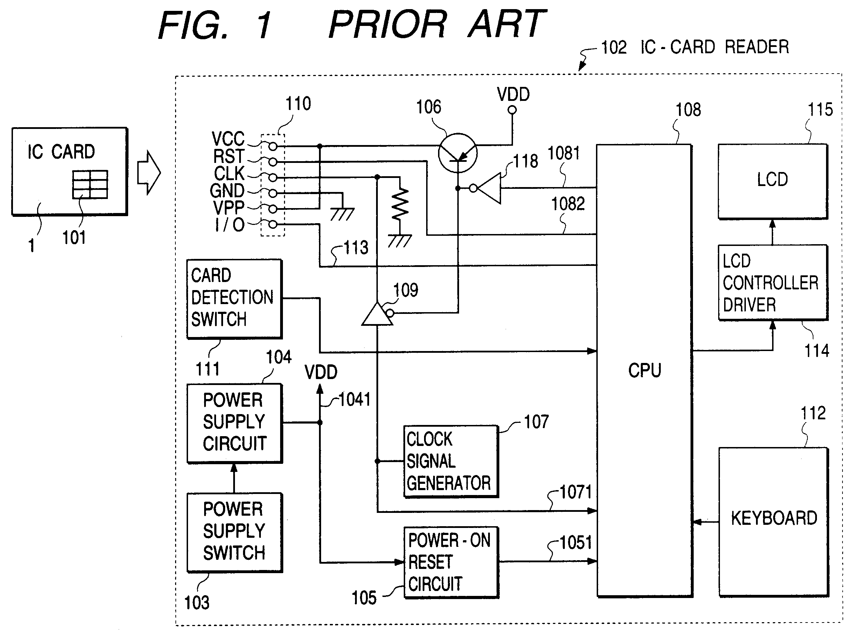

Fig. 1 shows a prior-art IC-card reader 102 having a card accommodating portion into and from which an IC card 1 can be moved. A surface of the IC card 1 has a set 101 of contacts VCC, RST, CLK, GND, VPP, and I/O. The IC card 1 contains a microprocessor and a memory.

With reference to Fig. 1, the prior-art IC-card reader 102 includes a power supply switch 103, a power supply circuit 104, a power-on reset circuit 105, a VCC output switch 106, a clock signal generator 107, a CPU 108, a tri-state buffer gate 109, a set 110 of contacts, a card detection switch 111, a keyboard 112, an LCD (liquid crystal display) controller driver 114, an LCD 115, and an inverter 118.

The prior-art IC-card reader 102 of Fig. 1 operates as follows. When a user or an operator changes the power supply switch 103 to an ON position, the power supply circuit 104 is started. The power supply circuit 104 includes a combination of a battery and a voltage regulator. The power supply circuit 104 generates a constant power supply voltage VDD when being started. The power supply voltage VDD is fed from the power supply circuit 104 to the power-on reset circuit 105, the VCC output switch 106, the clock signal generator 107, and other circuits and devices within the IC-card reader 102.

The clock signal generator 107 includes a constant-frequency oscillator. The clock signal generator 107 produces and outputs a constant-frequency clock signal 1071 when being fed with the power supply voltage VDD. The clock signal 1071 is applied from the clock signal generator 107 to the CPU 108 and the tri-state buffer gate 109. The frequency of the clock signal 1071 is equal to 3.57 MHz.

The power-on reset circuit 105 outputs an active power-on reset signal 1051 to the CPU 108 at a moment which follows the moment of the reception of the power supply voltage VDD by a given time. The CPU 108 includes a combination of an I/O port, a signal processing section, a ROM, and a RAM. The CPU 108 is designed to operate in accordance with a program stored in the ROM. The CPU 108 is initialized by the active power-on reset signal 1051 so that the program is started and the CPU 108 falls into a stand-by state.

The reader contact set 110 has contacts VCC, RST, CLK, GND, VPP, and I/O corresponding to the contacts VCC, RST, CLK, GND, VPP, and I/O in the set 101 on the IC card 1 respectively. When the user or the operator places the IC card 1 into the card accommodating portion of the IC-card reader 102, the contacts of the reader contact set 110 are brought into touch with the corresponding contacts in the set 101 on the IC card 1 respectively. As a result, the contacts of the reader contact set 110 are electrically connected to the corresponding contacts in the set 101 on the IC card 1 respectively. The card detection switch 111 detects that the IC card 1 is placed into the card accommodating portion of the IC-card reader 102. The card detection switch 111 informs the CPU 108 that the IC card 1 is placed into the card accommodating portion of the IC-card reader 102.

When the user or the operator actuates the keyboard 112 in a prescribed manner, the keyboard 112 feeds a corresponding signal to the CPU 108. This signal represents a request for reading data from the IC card 1. The CPU 108 outputs an effective card activation signal 1081 in response to the signal fed from the keyboard 112. The effective card activation signal 1081 is transmitted from the CPU 108 to the VCC output switch 106 and the tri-state buffer gate 109 via the inverter 118. The effective card activation signal 1081 changes the VCC output switch 106 and the tri-state buffer gate 109 to ON states. As a result, the power supply voltage VDD is transmitted from the power supply circuit 104 to the IC card 1 via the VCC output switch 106, the reader contact VCC, and the IC-card contact VCC. In addition, the clock signal 1071 is transmitted from the clock signal generator 107 to the IC card 1 via the tri-state buffer gate 109, the reader contact CLK, and the IC-card contact CLK. Subsequently, the CPU 108 feeds a card reset signal 1082 to the IC card 1 via the reader contact RST and the IC-card contact RST. The microprocessor and the memory in the IC card 1 are activated and started by the transmitted power supply voltage VDD, the transmitted clock signal 1071, and the fed card reset signal 1082.

Then, the IC-card reader 102 communicates with the IC card 1 and reads data (first IC-card data) from the IC card 1. Specifically, the data is transmitted from the IC card 1 to the CPU 108 via the IC-card contact I/O and the reader contact I/O. The feed of the common clock signal 1071 to the CPU 108 and the IC card 1 enables the establishment of the synchronization in the communication between the CPU 108 and the IC card 1.

The CPU 108 processes the data transmitted from the IC card 1, and outputs the resultant data (referred to as second IC-card data) to the LCD controller driver 114. The LCD controller driver 114 converts the second IC-card data into a video signal, and outputs the video signal to the LCD 115. The LCD 115 displays the video signal. In this way, the LCD 115 indicates information represented by the data read from the IC card 1.

In the prior-art IC-card reader 102 of Fig. 1, the clock signal generator 107 and the CPU 108 continue to be activated as long as the power supply switch 103 remains in its ON position.
Accordingly, the prior-art IC-card reader 102 of Fig. 1 tends to consume electric power at a high rate.

### First Embodiment

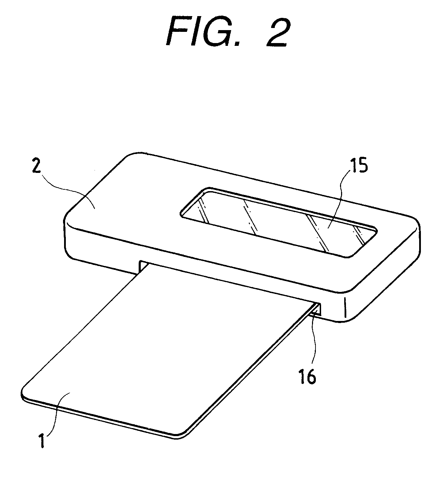

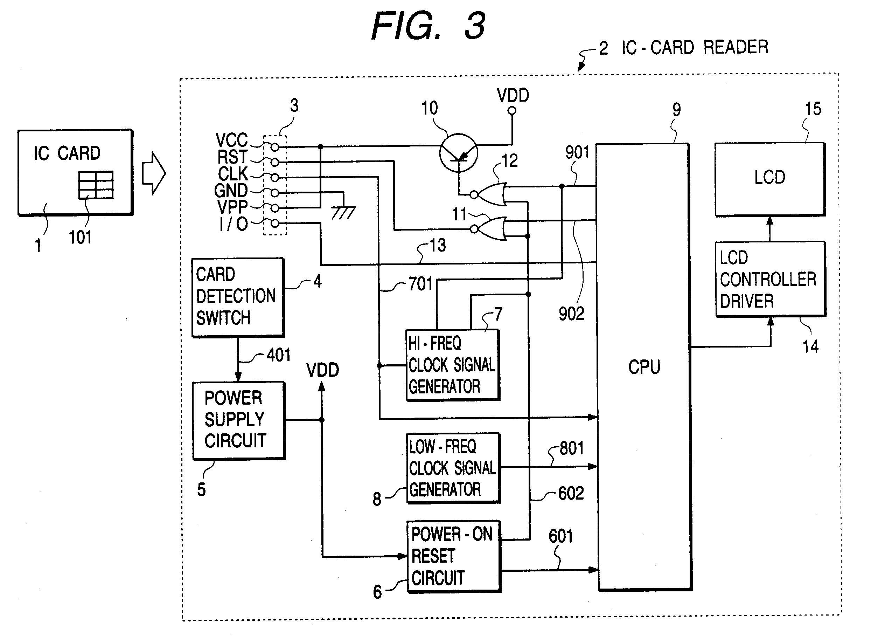

With reference to Fig. 2, an IC-card reader 2 has a body provided with an LCD (liquid crystal display) 15. The body of the IC-card reader 2 has a card accommodating portion formed with a card insertion opening or slot 16. A part of an IC card 1 can be moved into and out of the card accommodating portion of the IC-card reader body via the card insertion opening or slot 16. The IC card 1 contains, for example, a microprocessor and a memory. As shown in Fig. 3, a surface of the IC card 1 has a set 101 of contacts VCC, RST, CLK, GND, VPP, and I/O. The configuration (arrangement) and the electrical characteristics of the contacts in the set 101 are in conformity with the ISO (International Standardization Organization) standards.

With reference to Fig. 3, the IC-card reader 2 includes a set 3 of contacts, a card detection switch 4, a power supply circuit 5, a power-on reset circuit 6, a high-frequency clock signal generator 7, a low-frequency clock signal generator 8, a CPU 9, a VCC output switch 10, NOR gates 11 and 12, an LCD (liquid crystal display) controller driver 14, and the LCD 15.

The reader contact set 3 has contacts VCC, RST, CLK, GND, VPP, and I/O corresponding to the contacts VCC, RST, CLK, GND, VPP, and I/O in the set 101 on the IC card 1 respectively. The reader contact VCC is used for transmitting a power supply voltage from the IC-card reader 2 to the IC card 1. The reader contact RST is used for transmitting a reset signal from the IC-card reader 2 to the IC card 1. The reader contact CLK is used for transmitting a clock signal from the IC-card reader 2 to the IC card 1. The reader contact GND is connected to the negative terminal of the power supply circuit 5 via a ground line in the IC-card reader 2. Accordingly, the reader contact GND is subjected to a ground potential. The reader contact GND is used for coupling the ground line in the IC-card reader 2 and a ground line in the IC card 1. The reader contact VPP is used for transmitting a program voltage from the IC-card reader 2 to the IC card 1. The reader contact I/O is used for transmitting data between the IC-card reader 2 and the IC card 1.

The reader contact VPP is electrically connected to the reader contact VCC. The reader contact VPP may be electrically separate from the reader contact VCC. For example, the reader contact VPP may be subjected to a given voltage independent of a power supply voltage applied to the reader contact VCC.
Alternatively, the reader contact VPP may be omitted.

The card detection switch 4 is electrically connected to a control terminal of the power supply circuit 5. An output terminal of the power supply circuit 5 is connected to an input terminal of the power-on reset circuit 6 and an emitter of a PNP transistor in the VCC output switch 10. The output terminal of the power supply circuit 5 is also connected to other circuits and devices in the IC-card reader 2 although the illustration of the connections thereamong is omitted from Fig. 3 for clarity. The power-on reset circuit 6 has first and second output terminals. The first output terminal of the power-on reset circuit 6 is connected to the CPU 9. The second output terminal of the power-on reset circuit 6 is connected to a first input terminal of the NOR gate 11, a first input terminal of the NOR gate 12, and a first control terminal of the high-frequency clock signal generator 7. An output terminal of the high-frequency clock signal generator 7 is electrically connected to the reader contact CLK. The output terminal of the high-frequency clock signal generator 7 is also connected to the CPU 9. A second control terminal of the high-frequency clock signal generator 7 is connected to the CPU 9. An output terminal of the low-frequency clock signal generator 8 is connected to the CPU 9.

The CPU 9 is electrically connected to the reader contact I/O. A second input terminal of the NOR gate 11 is connected to the CPU 9. An output terminal of the NOR gate 11 is electrically connected to the reader contact RST. A second input terminal of the NOR gate 12 is connected to the CPU 9. An output terminal of the NOR gate 12 is connected to the base of the transistor in the VCC output switch 10. The collector of the transistor in the VCC output switch 10 is electrically connected to the reader contacts VCC and VPP. An input terminal of the LCD controller driver 14 is connected to the CPU 9. An output terminal of the LCD controller driver 14 is connected to the LCD 15.

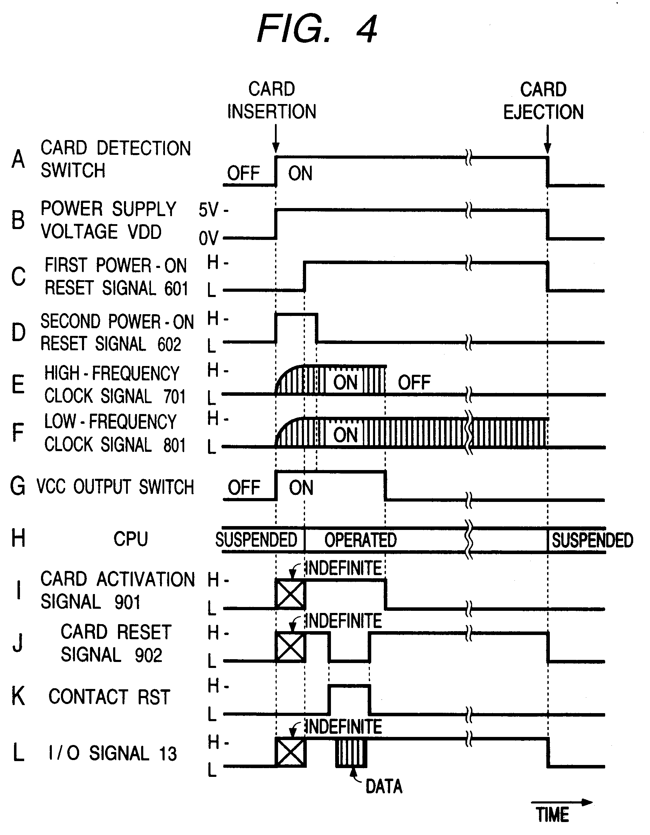

In the case where a user or an operator places the IC card 1 into the card accommodating portion of the IC-card reader 2, the contacts of the reader contact set 3 are brought into touch with the corresponding contacts in the set 101 on the IC card 1 immediately before the IC card 1 reaches an innermost position relative to the IC-card reader 2. As a result, the contacts of the reader contact set 3 are electrically connected to the corresponding contacts in the set 101 on the IC card 1 respectively. When the IC card 1 reaches the innermost position relative to the IC-card reader 2, the card detection switch 4 assumes an ON position and outputs an active card detection signal 401 to the power supply circuit 5. An example of a time-domain change in the position of the card detection switch 4 is illustrated in the part A of Fig. 4.

The card detection switch 4 is of, for example, a mechanical type having a set of a movable contact and a fixed contact. The card detection switch 4 may be of another type.

The power supply circuit 5 includes a combination of a battery and a voltage regulator. The power supply circuit 5 is started and activated by the active card detection signal 401. The power supply circuit 5 generates a constant power supply voltage VDD when being started and activated. The power supply voltage VDD is fed from the power supply circuit 5 to the power-on reset circuit 6, the VCC output switch 10, and the other circuits and devices within the IC-card reader 2. An example of a time-domain change in the power supply voltage VDD is illustrated in the part B of Fig. 4.

It is preferable that the battery in the power supply circuit 5 uses a series combination of coin-shaped small lithium batteries. During the activation of the power supply circuit 5, the power supply voltage VDD is maintained at a given fixed value (for example, 5 V) by the voltage regulator therein.

When the IC card 1 is removed or ejected from the card accommodating portion of the IC-card reader 2, the card detection switch 4 assumes an OFF position so that the active card detection signal 401 outputted from the card detection switch 4 to the power supply circuit 5 disappears. The power supply circuit 5 is deactivated upon the disappearance of the active card detection signal 401.

As understood from the previous description, the power supply circuit 5 is activated and deactivated when the IC card 1 is moved into and out of the card accommodating portion of the IC-card reader 2. During the absence of the IC card 1 from the card accommodating portion of the IC-card reader 2, the power supply circuit 5 remains deactivated and hence the IC-card reader 2 continues to be prevented from consuming electric power.

The power-on reset circuit 6 outputs a first high-level power-on reset signal 601 and a second high-level power-on reset signal 602 in response to the reception of the effective power supply voltage VDD. An example of a time-domain change in the first power-on reset signal 601 is illustrated in the part C of Fig. 4. An example of a time-domain change in the second power-on reset signal 602 is illustrated in the part D of Fig. 4.

The first power-on reset signal 601 is applied from the power-on reset circuit 6 to the CPU 9. As shown in the part B and part C of Fig. 4, the first power-on reset signal 601 changes from a low level to a high level at a moment which follows the moment of the positive-going change in the power supply voltage VDD by a given time interval. The given time interval is set equal to or longer than a time spent in the change of the high-frequency clock signal generator 7 from an unstable state to a stable state.

The second power-on reset signal 602 is applied from the power-on reset circuit 6 to the high-frequency clock signal generator 7, the NOR gate 11, and the NOR gate 12. As shown in the part B and part D of Fig. 4, the second power-on reset signal 602 changes from a low level to a high level at a moment simultaneous with the moment of the positive-going change in the power supply voltage VDD. The second power-on reset signal 602 remains in the high level during a given time interval. Then, the second power-on reset signal 602 returns to the low level. The moment of the return of the second power-on reset signal 602 to the low level follows the moment of start of operation of the CPU 9 by a predetermined time interval.

The high-frequency clock signal generator 7 is enabled by the second power-on reset signal 602 in the high-level state. The NOR gate 12 turns on the VCC output switch 10 in response to the second power-on reset signal 602 in the high-level state. Thus, during a transient period until the CPU 9 starts to normally operate in response to the second power-on reset signal 602, the high-frequency clock signal generator 7 is enabled and the VCC output switch 10 is changed to the ON state regardless of conditions of the CPU 9. An example of a time-domain change in the state of the VCC output switch 10 is illustrated in the part G of Fig. 4.

The high-frequency clock signal generator 7 includes a constant-frequency oscillator. The high-frequency clock signal generator 7 serves to output a clock signal 701 having a predetermined high frequency (for example, 3.57 MHz). The high-frequency clock signal generator 7 is activated by either the second power-on reset signal 602 in the high-level state or a high-level card activation signal 901 fed from the CPU 9. The high-frequency clock signal generator 7 remains inactive in the absence of both the second power-on reset signal 602 in the high-level state and the high-level card activation signal 901. This is advantageous in electric power economy. An example of a time-domain change in the high-frequency clock signal 701 is illustrated in the part E of Fig. 4. The high-frequency clock signal 701 is applied from the high-frequency clock signal generator 7 to the CPU 9 and the reader contact CLK. The high-frequency clock signal 701 can be transmitted from the IC-card reader 2 to the IC card 1 via the reader contact CLK and the IC-card contact CLK. The feed of the common clock signal 701 to the CPU 9 and the IC card 1 enables the establishment of the synchronization in the communication between the CPU 9 and the IC card 1.

The CPU 9 includes a combination of an I/O port, a signal processing section, a ROM, and a RAM. The CPU 9 is designed to operate in accordance with a program stored in the ROM. The CPU 9 is reset by a change of the first power-on reset signal 601 from the low level to the high level, and then the program is started and the CPU 9 starts to normally operate. An example of a time-domain change in conditions of the CPU 9 is illustrated in the part H of Fig. 4. The CPU 9 outputs the high-level card activation signal 901 and a high-level card reset signal 902, and implements given processing in accordance with the execution of the program.

The card activation signal 901 is fed from the CPU 9 to the high-frequency clock signal generator 7 and the NOR gate 12. The high-level state and the low-level state of the card activation signal 901 can enable and disable the high-frequency clock signal generator 7. An example of a time-domain change in the card activation signal 901 is illustrated in the part I of Fig. 4. The NOR gate 12 executes NOR operation between the second power-on reset signal 602 and the card activation signal 901. The resultant output signal of the NOR gate 12 is fed to the VCC output switch 10. The VCC output switch 10 changes between the ON state and the OFF state in response to the output signal of the NOR gate 12.

The card reset signal 902 is fed from the CPU 9 to the NOR gate 11. An example of a time-domain change in the card reset signal 902 is illustrated in the part J of Fig. 4. The NOR gate 11 executes NOR operation between the second power-on reset signal 602 and the card reset signal 902. The resultant output signal of the NOR gate 11 is applied to the reader contact RST. An example of a time-domain change in the voltage at the reader contact RST (that is, the output signal of the NOR gate 11) is illustrated in the part K of Fig. 4.

With reference to Fig. 4, the program in the CPU 9 starts and hence the CPU 9 starts to normally operate in response to the change of the first power-on reset signal 601 to the high level. When the effective power supply voltage VDD appears, the card activation signal 901 and the card reset signal 902 change from the low-level states to indefinite states. The card activation signal 901 and the card reset signal 902 continue to be in the indefinite states until the CPU 9 starts to normally operate. Upon the start of normal operation of the CPU 9, the card activation signal 901 and the card reset signal 902 change from the indefinite states to the high-level states.

The CPU 9 holds the card activation signal 901 in the high-level state during a given time interval or a variable time interval. As shown in the part E, the part G, and the part I of Fig. 4, the high-frequency clock signal 701 remains present and the VCC output switch 10 remains in the ON state while the card activation signal 901 continues to be in the high-level state.

The low-frequency clock signal generator 8 includes a constant-frequency oscillator. The low-frequency clock signal generator 8 serves to output a clock signal 801 having a predetermined low frequency (for example, about 33 kHz). The frequency of the clock signal 801 is remarkably lower than the frequency of the clock signal 701. The low-frequency clock signal generator 8 starts to operate when being supplied with the effective power supply voltage VDD. The low-frequency clock signal generator 8 continues to operate in the presence of the effective power supply voltage VDD. An example of a time-domain change in the low-frequency clock signal 801 is illustrated in the part F of Fig. 4. The low-frequency clock signal 801 is applied from the low-frequency clock signal generator 8 to the CPU 9.

The low-frequency clock signal generator 8 may include a CR oscillator. For example, the low-frequency clock signal generator 8 includes a fixed resistor connected to a given circuit within the CPU 9 to form a CR oscillator.

Operation of the CPU 9 can be changed between a high-speed mode and a low-speed mode. The high-speed mode of operation is implemented by using the high-frequency clock signal 701. The low-speed mode of operation is implemented by using the low-frequency clock signal 801. During the execution of the low-speed mode of operation, the high-frequency clock signal generator 7 remains disabled or deactivated. Generally, the low-speed mode of operation is better than the high-speed mode of operation in electric power economy. The high-speed mode of operation is better than the low-speed mode of operation in data processing rate.

As previously described, the VCC output switch 10 includes a PNP transistor. The base of the transistor in the VCC output switch 10 is connected to the output terminal of the NOR gate 12. The input terminals of the NOR gate 12 are subjected to the second power-on reset signal 602 and the card activation signal 901 respectively. When at least one of the second power-on reset signal 602 and the card activation signal 901 is in the high-level state, the VCC output switch 10 is in the ON state so that the power supply voltage VDD is fed to the IC card 1 via the reader contact VCC. An example of a time-domain change in the state of the VCC output switch 10 is illustrated in the part G of Fig. 4.

The input terminals of the NOR gate 11 are subjected to the second power-on reset signal 602 and the card reset signal 902 respectively. The output terminal of the NOR gate 11 is connected to the reader contact RST. An output signal from the NOR gate 11 can be transmitted to the IC card 1, being used thereby as a reset signal. As shown in the part J of Fig. 4, the card reset signal 902 continues to be in the indefinite state until the CPU 9 starts to normally operate. With reference to the part D and the part K of Fig. 4, the second power-on reset signal 602 applied to the NOR gate 11 prevents the output signal of the NOR gate 11 (the reset signal or the voltage at the reader contact RST) from being in an indefinite state even when the card reset signal 902 is in the indefinite state.

An I/O signal 13 can be transmitted between the CPU 9 and the IC card 1 via the reader contact I/O and the IC-card contact I/O. Data read out from the IC card 1 and an answer signal outputted from the IC card 1 are represented by the I/O signal 13. An example of a time-domain change in the state of the I/O signal 13 is illustrated in the part L of Fig. 4. It is preferable to pull up the I/O signal 13 to the voltage at the reader contact VCC according to the ISO standards.

The power supply voltage VDD, the high-frequency clock signal 701, and a reset signal are fed from the IC-card reader 2 to the IC card 1 in a given sequence. The IC card 1 transmits an answer signal (an answer-to-reset signal) to the IC-card reader 2 in response to the reset signal. The answer signal is represented by the I/O signal 13 which travels from the IC card 1 to the CPU 9 via the IC-card contact I/O and the reader contact I/O. The CPU 9 receives the answer signal, obtaining data read out from the IC card 1 in a given procedure.

According to a first example, data read out from the IC card 1 is represented by a portion of the answer signal. In this case, the CPU 9 extracts the data from the answer signal. According to a second example, data is stored in a file provided in the memory within the IC card 1. In this case, the CPU 9 outputs a data transmission command to the IC card 1 by using the I/O signal 13, and the IC card 1 transmits the data from the file to the CPU 9 in response to the data transmission command. The data transmitted from the file within the IC card 1 is represented by the I/O signal 13. Thus, the CPU 9 reads out the data from the IC card 1.

If the CPU 9 fails to read out the data from the IC card 1 due to some cause, the communication between the IC card 1 and the IC-card reader 2 ends abnormally. In this case, the CPU 9 recognizes the reception of error data (wrong data) rather than normal data, and executes a given process for an error.

The CPU 9 executes the reading of the data from the IC card 1 during its high-speed mode of operation. When the reading of the data from the IC card 1 is completed, the CPU 9 changes its operation from the high-speed mode to the low-speed mode. In addition, the CPU 9 changes the card activation signal 901 to the low level (see the part I of Fig. 4). Since the second power-on reset signal 602 is in the low-level state at this time, the change of the card activation signal 901 to the low level moves both the VCC output switch 10 and the high-frequency clock signal generator 7 to the OFF states (see the part E and the part G of Fig. 4).

The CPU 9 subjects the IC-card data (the data read out from the IC card 1) to given conversion such as conversion from a binary code to decimal code or conversion to an indication pattern. The CPU 9 feeds the conversion-resultant data to the LCD 15 via the LCD controller driver 14. The conversion-resultant data is indicated by the LCD 15. Thus, the information represented by the data read out from the IC card 1 is displayed by the LCD 15. It should be noted that the LCD controller driver 14 and the CPU 9 may be combined into a single chip. If the data read out from the IC card 1 corresponds to error data (wrong data), the CPU 9 controls the LCD 15 via the LCD controller driver 14 to indicate an error message.

When the IC card 1 is ejected or removed from the card accommodating portion of the IC-card reader 2, the card detection switch 4 assumes the OFF position (see the part A of Fig. 4) so that the power supply circuit 5 is deactivated. As a result, the effective power supply voltage VDD disappears (see the part B of Fig. 4), and the operation of the IC-card reader 2 is stopped.

As shown in the part B and the part D of Fig. 4, the second power-on reset signal 602 immediately changes to the high level when the power supply voltage VDD rises to an effective level. As shown in the part D and the part E of Fig. 4, the high-frequency clock signal generator 7 is activated in response to the second power-on reset signal 602 in the high-level state. With reference to the part C and the part H of Fig. 4, the CPU 9 starts to normally operate in response to the change of the first power-on reset signal 601 from the low level to the high level at the moment after the appearance of the effective second power-on reset signal 602. Accordingly, an effective high-frequency clock signal 701 becomes available before the CPU 9 starts to normally operate. Thus, the CPU 9 can use the effective high-frequency clock signal 701 during a time from the moment of the start of its normal operation. This enables reliable operation of the CPU 9 at an initial stage. The CPU 9 is programmed to initially select the high-speed mode of operation which uses the high-frequency clock signal 701. As shown in the part D of the Fig. 4, the second power-on reset signal 602 remains in the high level during the given time interval. The second power-on reset signal 602 returns to the low level after the CPU 9 starts to normally operate (see the part D and the part H of Fig. 4).

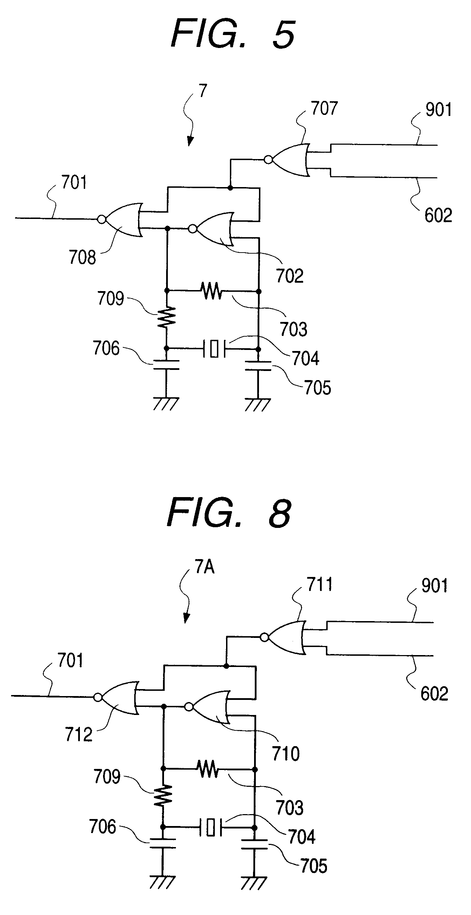

With reference to Fig. 5, the high-frequency clock signal generator 7 includes NOR gates 702, 707, and 708, resistors 703 and 709, a resonator 704, and capacitors 705 and 706. First and second input terminals of the NOR gate 707 are subjected to the card activation signal 901 and the second power-on reset signal 602 respectively. The output terminal of the NOR gate 707 is connected to first input terminals of the NOR gates 702 and 708. A second input terminal of the NOR gate 702 is grounded via the capacitor 705. The output terminal of the NOR gate 702 is connected to a second input terminal of the NOR gate 708. The resistor 703 is connected between the second input terminal and the output terminal of the NOR gate 702. The resistor 703 is used for feedback. A first end of the resistor 709 is connected to the output terminal of the NOR gate 702. A second end of the resistor 709 is grounded via the capacitor 706. The resistor 709 is used for gain control. The resistor 709 may be omitted. A first end of the resonator 704 is connected to the junction between the capacitor 705 and the second input terminal of the NOR gate 702. A second end of the resonator 704 is connected to the junction between the resistor 709 and the capacitor 706. The resonator 704 is of, for example, a quartz-crystal type or a ceramic type. The high-frequency clock signal 701 appears at the output terminal of the NOR gate 708.

When at least one of the card activation signal 901 and the second power-on reset signal 602 is in the high-level state, the high-frequency clock signal generator 7 is enabled to oscillate at a frequency determined by the resonator 704. When both the card activation signal 901 and the second power-on reset signal 602 are in the low-level states, the oscillation of the high-frequency clock signal generator 7 is inhibited.

As previously described, the low-speed mode of operation of the CPU 9 uses the low-frequency clock signal 801. On the other hand, the high-speed mode of operation of the CPU 9 uses the high-frequency clock signal 701. During the low-speed mode of operation of the CPU 9, the high-frequency clock signal generator 7 remains suspended to provide electric power economy. Generally, the low-speed mode of operation of the CPU 9 is better than the high-speed mode of operation thereof in electric power economy. The frequency of the high-frequency clock signal 701 is equal to, for example, 3.57 MHz. The frequency of the low-frequency clock signal 801 is equal to, for example, about 33 kHz. During the high-speed mode of operation, the CPU 9 executes a step of reading out data from the IC card 1 and a step of processing or converting the readout data. During the low-speed mode of operation, the CPU 9 executes a step of enabling the data to be indicated by the LCD 15. The step of enabling the data to be indicated by the LCD 15 follows the step of reading out the data from the IC card 1 and the step of processing or converting the readout data. It should be noted that the CPU 9 may execute the step of processing or converting the readout data during the low-speed mode of operation.

With reference to the part D and the part I of Fig. 4, the card activation signal 901 changes to the low level after the second power-on reset signal 602 changes to the low level. Accordingly, the NOR gate 12 changes the VCC output switch 10 to the OFF state when the card activation signal 901 changes to the low level (see the part G and the part I of Fig. 4). In addition, operation of the high-frequency clock signal generator 7 is suspended by the change of the card activation signal 901 to the low level (see the part E and the part I of Fig. 4). Accordingly, the voltage at the reader terminal CLK or the voltage of the high-frequency clock signal 701 drops to zero when the feed of the effective power supply voltage VDD to the IC card 1 is blocked. This is desirable in the case where the IC card 1 includes a CMOS circuit. It should be noted that in the absence of the application of a power supply voltage to a power supply terminal of a general CMOS circuit, the application of a non-zero voltage to another input or output terminal thereof may damage the CMOS circuit. The drop of the high-frequency clock signal 701 to zero is ensured by the NOR gate 708 in Fig. 5. The NOR gate 708 also serves as a buffer and a wave-shaper related to the high-frequency clock signal 701.

It should be noted that the NOR gate 12 in Fig. 3 and the NOR gate 707 in Fig. 5 may be a common NOR gate. Furthermore, the NOR gates 11 and 12 in Fig. 3, and the NOR gates 702, 707, and 708 in Fig. 5 may be replaced by other gates such as NAND gates or tri-state buffer gates.

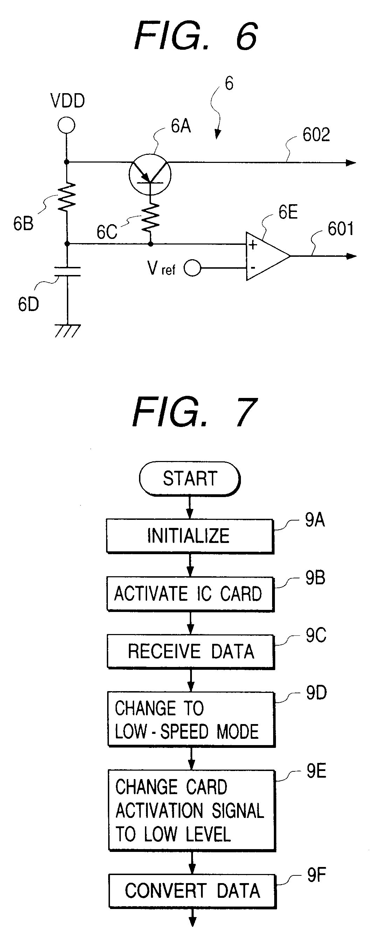

As shown in Fig. 6, the power-on reset circuit 6 includes a PNP transistor 6A, resistors 6B and 6C, a capacitor 6D, and a comparator 6E. The emitter of the transistor 6A is connected to the output terminal of the power supply circuit 5 (see Fig. 3). Thus, the emitter of the transistor 6A is subjected to the power supply voltage VDD. A first end of the resistor 6B is connected to the emitter of the transistor 6A. A second end of the resistor 6B is connected to a first end of the capacitor 6D. A second end of the capacitor 6D is grounded. The base of the transistor 6A is connected via the resistor 6C to the junction between the resistor 6B and the capacitor 6D. A non-inverting input terminal of the comparator 6E is connected to the junction between the resistor 6B and the capacitor 6D. An inverting input terminal of the comparator 6E is subjected to a predetermined reference voltage Vref. The first power-on reset signal 601 appears at the output terminal of the comparator 6E. The second power-on reset signal 602 appears at the collector of the transistor 6A.

When an effective power supply voltage VDD appears, a voltage at the junction between the resistor 6B and the capacitor 6D starts to rise at a rate determined by a time constant depending on the resistance of the resistor 6B and the capacitance of the capacitor 6D. The comparator 6E continues to output a low-level power-on reset signal 601 until the voltage at the junction between the resistor 6B and the capacitor 6D reaches the reference voltage Vref. The comparator 6E changes the power-on reset signal 601 to the high level when the voltage at the junction between the resistor 6B and the capacitor 6D reaches the reference voltage Vref. The comparator 6E continues to output the high-level power-on reset signal 601 while the voltage at the junction between the resistor 6B and the capacitor 6D remains higher than the reference voltage Vref. On the other hand, the second power-on reset signal 602 changes to the high level upon the appearance of the effective power supply voltage VDD. The second power-on reset signal 602 remains in the high-level state until the voltage at the junction between the resistor 6B and the capacitor 6D reaches a value equal to the power supply voltage VDD minus the base-emitter threshold voltage of the transistor 6A. The second power-on reset signal 602 returns to the low level when the voltage at the junction between the resistor 6B and the capacitor 6D reaches the previously-indicated value. Then, the second power-on reset signal 602 continues to be in the low-level state. As understood from the above description, the first power-on reset signal 601 changes to the high level after the second power-on reset signal 602 changes to the high level. In addition, the moment of the change of the first power-on reset signal 601 to the high level is in an interval during which the second power-on reset signal 602 remains in the high-level state. The moment of the return of the second power-on reset signal 602 to the low level is in an interval during which the first power-on reset signal 601 remains in the high-level state.

As previously described, the CPU 9 operates in accordance with a program stored in its internal ROM. Fig. 7 is a flowchart of a part of the program. The program is started by the change of the first power-on reset signal 601 from the low level to the high level.

As shown in Fig. 7, a first block 9A of the program executes an initializing process by which the CPU 9 selects the high-frequency clock signal 701 to implement the high-speed mode of operation. A block 9B following the block 9A activates the IC card 1. Specifically, the block 9B outputs a high-level card activation signal 901 and a high-level card reset signal 902. A block 9C subsequent to the block 9B reads out data from the IC card 1. Specifically, the block 9C changes the card reset signal 902 to the low level. The IC card 1 transmits data toward the IC-card reader 2 in response to the change of the card reset signal 902 to the low level. The card reset signal 902 remains in the low-level state while the data is read out from the IC card 1. After the reading of the data from the IC card 1 is completed, the block 9C changes the card reset signal 902 to the high level. A block 9D following the block 9C selects the low-frequency clock signal 801 so that the high-speed mode of operation will be replaced by the low-speed mode of operation. A block 9E subsequent to the block 9D changes the card activation signal 901 to the low level. A block 9F following the block 9E subjects the readout data to given conversion. Alter the block 9F, the program advances to subsequent blocks (not shown).

### Second Embodiment

A second embodiment of this invention is similar to the embodiment of Figs. 2-7 except that a high-frequency clock signal generator 7A replaces the high-frequency clock signal generator 7.

As shown in Fig. 8, the high-frequency clock signal 7A includes an NAND gate 710, an OR gate 711, an AND gate 712, resistors 703 and 709, a resonator 704, and capacitors 705 and 706. First and second input terminals of the OR gate 711 are subjected to the card activation signal 901 and the second power-on reset signal 602 respectively. The output terminal of the OR gate 711 is connected to first input terminals of the NAND gate 710 and the AND gate 712. A second input terminal of the NAND gate 710 is grounded via the capacitor 705. The output terminal of the NAND gate 710 is connected to a second input terminal of the AND gate 712. The resistor 703 is connected between the second input terminal and the output terminal of the NAND gate 710. The resistor 703 is used for feedback. A first end of the resistor 709 is connected to the output terminal of the NAND gate 710. A second end of the resistor 709 is grounded via the capacitor 706. The resistor 709 is used for gain control. The resistor 709 may be omitted. A first end of the resonator 704 is connected to the junction between the capacitor 705 and the second input terminal of the NAND gate 710. A second end of the resonator 704 is connected to the junction between the resistor 709 and the capacitor 706. The resonator 704 is of, for example, a quartz-crystal type or a ceramic type. The high-frequency clock signal 701 appears at the output terminal of the AND gate 712.

An IC-card reader includes a body. A first device is operative for detecting that an IC card is moved into the body. A second device is operative for reading out first data from the IC card, and for processing the first data into second data. A third device is operative for indicating information represented by the second data. The second device and the third device are activated when the first device detects that the IC card is moved into the body.

## Claims

1. An IC-card reader comprising:
a body;
first means for detecting that an IC card is moved into the body;
second means for reading out first data from the IC card, and for processing the first data into second data;
third means for indicating information represented by the second data; and
fourth means responsive to the first means and connected to the second means and the third means for activating the second means and the third means when the first means detects that the IC card is moved into the body.

2. An IC-card reader as recited in claim 1, further comprising a first clock signal generator outputting a first clock signal to the second means, the first clock signal having a first given frequency, a second clock signal generator outputting a second clock signal to the second means, the second clock signal having a second given frequency lower than the first given frequency, the second means selecting one out of the first and second clock signals and operating in response to the selected clock signal.

3. An IC-card reader as recited in claim 2, further comprising fifth means for deactivating the first clock signal generator after the second means reads out the first data from the IC card.

4. An apparatus for an IC card, comprising:
a first generator producing a first clock signal having a first given frequency;
a second generator producing a second clock signal having a second given frequency lower than the first given frequency; and
a CPU being programmed to read out first data from the IC card and to process the first data into second data, the CPU being connected to the first and second generators and receiving the first and second clock signals, the CPU being programmed to select one out of the first and second clock signals and operating in response to the selected clock signal, the CPU being programmed to select the first clock signal when reading out the first data from the IC card, and to select the second clock signal when processing the first data into the second data.

5. An apparatus as recited in claim 4, further comprising means for deactivating the first generator when the CPU selects the second clock signal.
